# FASCICULE DE BREVET EUROPEEN

(11) **EP 1 172 280 B1**
(45) Date de publication et mention de la délivrance du brevet: **09.03.2005**
(21) Numéro de dépôt: 01401710.7
(22) Date de dépôt: 27.06.2001
(51) Int. Cl.: B62D 6/00

(54) **Ensemble de direction assistée électrique pour véhicule automobile**
Elektrische Servolenkeinrichtung für ein Kraftfahrzeug
Electric power steering assembly for a motor vehicle

(30) Priorité: 11.07.2000 FR 0009056
(43) Date de publication de la demande: 16.01.2002
(73) Titulaire: Peugeot Citroen Automobiles SA, 92200 Neuilly sur Seine (FR)
(72) Inventeur: Bernede, Dominique Marc, 78130 Les Mureaux (FR); Del Fabbro, Tonino, 78230 Le Pecq (FR)
(74) Mandataire: Jacobson, Claude

(56) Documents cités:
- US-A- 5 072 804
- PATENT ABSTRACTS OF JAPAN vol. 1997, no. 01, 31 janvier 1997 (1997-01-31) -& JP 08 244635 A (HONDA MOTOR CO LTD), 24 septembre 1996 (1996-09-24)
- PATENT ABSTRACTS OF JAPAN vol. 1997, no. 07, 31 juillet 1997 (1997-07-31) -& JP 09 076927 A (KAYABA IND CO LTD), 25 mars 1997 (1997-03-25)

## Description

L'invention se rapporte à un ensemble de direction de véhicule automobile comportant un dispositif d'assistance électrique et plus particulièrement à un ensemble de direction assistée selon le préambule de la revendication 1. Un tel ensemble est connu de JP 08 244 635.

Elle concerne plus précisément un ensemble de direction assistée du type comprenant un arbre de direction rotatif portant à une extrémité un volant et à son autre extrémité un organe de transmission coopérant avec une crémaillère mobile en translation, reliée à chacune de ses extrémités à un mécanisme d'orientation des roues directrices du véhicule, le dispositif d'assistance comportant un moteur électrique qui entraîne un organe d'assistance coopérant avec la crémaillère, et un dispositif de commande fournissant audit moteur électrique un signal de commande adapté pour faire varier le couple de sortie du moteur électrique en fonction de paramètres de fonctionnement de l'arbre de direction et/ou plus généralement du véhicule.

Dans les systèmes de direction assistée électrique connus, un moteur électrique entraîne, par l'intermédiaire d'un réducteur, un pignon engrenant avec la crémaillère de direction, de façon à transmettre à la crémaillère un effort d'assistance. Il existe d'autres technologies, comme par exemple celle des vis à billes, pour transmettre le mouvement de rotation du moteur à la crémaillère. Le moteur électrique est commandé par un calculateur qui applique des lois de commande préprogrammées pour tenir compte de l'évolution de paramètres de fonctionnement du véhicule et de la direction, tels que la vitesse du véhicule, le couple appliqué sur le volant et l'arbre de direction par le conducteur, et la vitesse de rotation du volant. Le calculateur délivre au moteur électrique, à partir de ces paramètres de fonctionnement et des lois de commande préprogrammées, un signal de commande de couple correspondant au couple moteur de sortie à délivrer pour exercer sur la crémaillère l'effort d'assistance désiré.

En général, il n'est pas prévu de boucle de régulation permettant de corriger le signal de commande émis vers le moteur en fonction de grandeurs mesurées, significatives d'un couple ou d'un effort d'assistance réellement délivrés par le moteur.

Un tel dispositif d'assistance ne donne pas entière satisfaction du fait de la difficulté à traduire un effort d'assistance désiré en couple de sortie moteur.

En effet, pour un couple de sortie donné du moteur électrique, l'effort d'assistance effectivement appliqué sur la crémaillère diffère sensiblement de l'effort d'assistance théorique, à cause de pertes d'énergie mécanique dans le moteur électrique (inertie, frottements) et dans le mécanisme de transformation du couple moteur en effort d'assistance, à savoir notamment le réducteur et l'organe de transmission à la crémaillère. A titre d'exemple, les pertes d'énergie mécanique précitées peuvent représenter, pour certains véhicules de type berline et dans des conditions de vitesse et de braquage de volant courantes, de l'ordre de 30% pour des couples-volant variables et de 15% pour des couples-volant constants, par rapport à l'effort théorique d'assistance sur la crémaillère. Ces pertes varient sur un même véhicule au cours du temps avec l'usure des pièces mécaniques de transmission, mais aussi d'un véhicule à l'autre, ces variations étant extrêmement difficiles à modéliser.

Un but principal de l'invention est de remédier à ces inconvénients et de proposer une direction assistée électrique dont le fonctionnement ne soit pas affecté par les différences existant d'un véhicule à l'autre ou par l'évolution au cours du temps des pertes d'énergie mécanique.

Dans ce but, un ensemble de direction de véhicule automobile du type précité est caractérisé en ce que le dispositif d'assistance comporte sur la crémaillère des moyens de mesure de l'effort exercé par l'organe d'assistance sur la crémaillère, et le dispositif de commande est adapté pour modifier le signal de commande de couple en fonction de la valeur d'effort mesurée par lesdits moyens de mesure.

Suivant d'autres caractéristiques :
- le dispositif de commande comporte un calculateur qui élabore, à partir de données préenregistrées et de paramètres de fonctionnement, un signal de consigne de couple, et un module de régulation qui élabore, en fonction du signal de consigne et de la valeur d'effort mesurée, le signal de commande de couple ;
- le module de régulation comporte un organe de conversion qui délivre à partir de la valeur d'effort mesurée, un signal de mesure qui est une image de la valeur réelle du couple d'assistance du moteur appliqué sur l'organe d'assistance ;
- le module de régulation comporte un organe comparateur qui reçoit en entrée le signal de mesure du couple et le signal de consigne de couple, et délivre en sortie un signal d'écart de couple ;
- le module de régulation comporte un régulateur P. I. D. (Proportionnel, Intégral, Dérivé) qui élabore le signal de commande de couple à partir du signal d'écart de couple ;
- le gain proportionnel du régulateur P. I. D. est préréglé à une valeur comprise entre 6 et 9 ;
- le gain intégral du régulateur P. I. D. est préréglé à une valeur comprise entre 140 et 210 ;
- le gain différentiel du régulateur P. I. D. est préréglé à une valeur comprise entre 0,016 et 0,024 ;
- l'ensemble de direction assistée comprend des moyens d'estimation du couple appliqué sur le volant, et le module de régulation est neutralisé pour des valeurs de couple estimé par lesdits moyens d'estimation inférieures à une valeur de couple prédéterminée ; et
- ladite valeur de couple prédéterminée est comprise entre 1 et 2 N.m.

L'invention vise également un procédé de commande, d'un ensemble de direction assistée du type précité, selon lequel on élabore le signal de commande de couple de la façon suivante :
- on mesure l'effort exercé par l'organe d'assistance sur la crémaillère ;
- on convertit la valeur d'effort ainsi obtenue en valeur de couple réel estimée à partir des caractéristiques du réducteur, de l'organe d'assistance et de la crémaillère ;
- on calcule l'écart d'une valeur de couple de consigne, déterminée à partir de données préenregistrées et de paramètres de fonctionnement, avec la valeur de couple réel ainsi estimée ;
- on calcule une valeur de commande de couple au moyen d'une loi de régulation P. I. D. dont les coefficients sont prédéterminés ;
- on élabore le signal de commande de couple qui correspond à ladite valeur de commande.

L'invention vise enfin un véhicule automobile comportant un ensemble de direction assistée électriquement, comme défini ci-dessus.

L'invention sera mieux comprise à la lecture de la description qui va suivre, donnée uniquement à titre d'exemple, et faite en se référant aux dessins annexés, sur lesquels :
- la figure 1 est une vue schématique d'une direction assistée suivant l'invention ;
- la figure 2 est un schéma représentant le dispositif d'assistance équipant une direction assistée suivant l'invention.

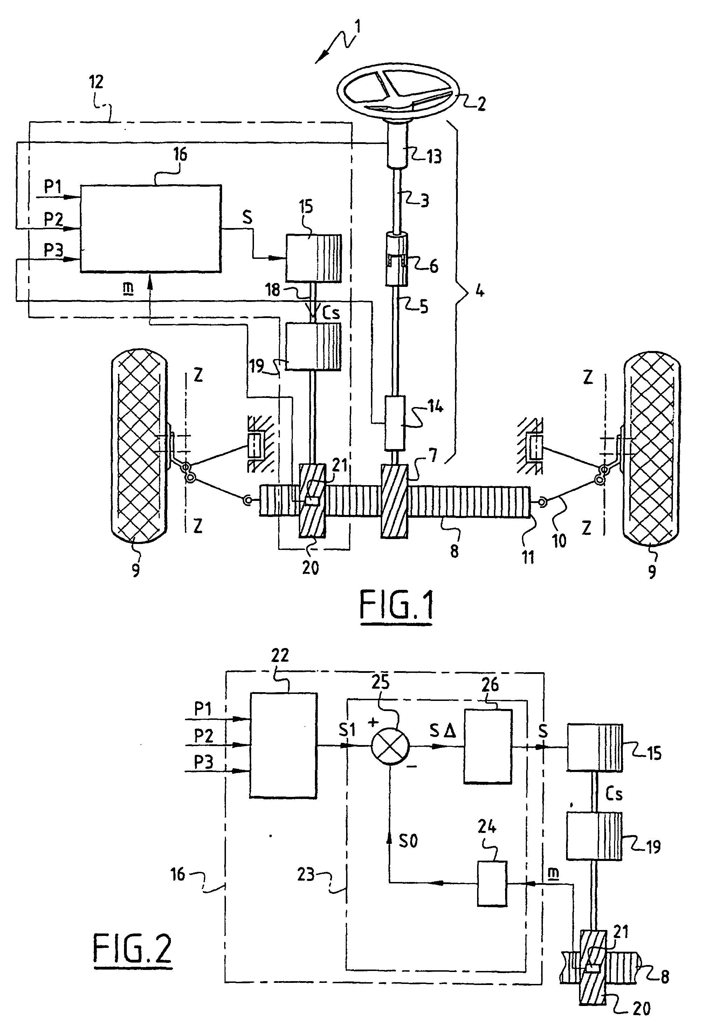

A la figure 1, on a représenté un ensemble de direction 1 de véhicule automobile assistée électriquement, qui comporte un volant 2 solidaire d'un premier tronçon 3 d'un arbre de direction 4 relié à un deuxième tronçon 5 de cet arbre de direction 4, par l'intermédiaire d'une liaison à cardan 6. L'arbre de direction 4 est ici composé de deux tronçons 3, 4 articulés, mais pourrait être constitué d'une pièce. L'arbre de direction 4 transmet le couple appliqué sur le volant 2 par le conducteur du véhicule à un pignon de transmission 7, qui engrène avec une crémaillère de direction 8 disposée transversalement par rapport à l'axe du véhicule entre deux roues directrices 9. Le pignon de transmission 7 pourrait être remplacé par tout autre organe de transmission adapté, comme par exemple une vis sans fin. Chaque roue directrice 9 est susceptible de pivoter autour d'un axe de pivotement vertical ou sensiblement Z-Z sous l'effet d'un déplacement linéaire de la crémaillère 8, ladite roue directrice 9 étant actionnée par une biellette 10 reliée à une extrémité 11 de la crémaillère 8.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction de paramètres de fonctionnement du véhicule, tels que la vitesse du véhicule, et de paramètres de fonctionnement de la direction, tels que la vitesse de rotation du volant et le couple appliqué sur le volant par l'utilisateur. Les trois paramètres cités sont respectivement désignés par les repères P1, P2, P3. La valeur de vitesse P1 du véhicule est déterminée par des moyens classiques de mesure de la vitesse présents usuellement sur les véhicules. La vitesse de rotation P2 du volant 2 est donnée par un capteur de vitesse angulaire 13 monté sur le premier tronçon 3 de l'arbre de direction 4, et la valeur P3 du couple appliqué sur le volant 2 est estimée au moyen d'un capteur de couple 14 monté sur le deuxième tronçon 5 de l'arbre de direction 4 dans une région proche du pignon de transmission 7.

Le dispositif d'assistance 12 comprend un moteur électrique 15 dont le couple de sortie Cₛ est commandé par un dispositif électronique de commande 16 qui délivre au moteur un signal de commande de couple S. Le couple de sortie Cₛ du moteur électrique 15 est transmis à un réducteur 19 par l'intermédiaire de l'arbre de sortie 18 du moteur 15, et à un pignon d'assistance 20 engrenant avec la crémaillère 8. La crémaillère comporte un capteur d'effort 21 adapté pour mesurer l'effort exercé par le pignon d'assistance 20 sur la crémaillère 8, et fournir au dispositif électronique de commande 16 la valeur m de l'effort ainsi mesuré.

Comme représenté à la figure 2, le dispositif électronique de commande 16 comprend un calculateur 22 et un module de régulation 23. Le calculateur 22 reçoit les signaux représentatifs des paramètres de fonctionnement P1, P2, P3 et leur applique des lois de commande préenregistrées afin d'élaborer et d'émettre vers une première entrée du module de régulation 23 un signal de consigne de couple S1.

Le signal représentatif de la valeur m de l'effort mesuré par le capteur d'effort 21 est envoyé vers une deuxième entrée du module de régulation 23, ce dernier comprenant un organe de conversion 24 qui délivre à partir de la valeur d'effort mesurée m, un signal de mesure S0 qui est une image de la valeur réelle du couple d'assistance du moteur appliqué sur le pignon d'assistance 20 et transmis à la crémaillère 8.

Le module de régulation 23 comprend par ailleurs un comparateur 25 qui reçoit en entrée le signal de mesure de couple S0 et le signal de consigne de couple S1 délivré par le calculateur 22, et qui délivre en sortie un signal d'écart de couple S_{Δ} transmis à un régulateur PID 26. Ce régulateur 26 applique au signal de couple S_{Δ} une loi proportionnelle/intégrale/dérivée, afin d'élabore; le signal de commande de couple S qui est ensuite appliqué au moteur électrique 15. Les coefficients de gain proportionnel/intégrateur/dérivé Kₚ, Kᵢ, K_{d}, appliqués dans la loi de régulation sont, par exemple pour un véhicule de type berline, respectivement de l'ordre de : 7.5 ; 175 ; 0.02.

La régulation du couple de sortie Cs du moteur électrique 15 par l'effort d'assistance, telle que décrite précédemment, permet d'obtenir un fonctionnement sensiblement amélioré de l'ensemble de direction assistée dans des phases correspondant à des couples appliqués sur le volant 2 dépassant un certain seuil ; par contre, pour des valeurs de couple appliqué sur le volant 2 qui se situent en-deçà d'une valeur de seuil Co, la boucle de régulation telle que décrite précédemment peut ne pas être utile et même dans certains cas dégrader le fonctionnement du dispositif d'assistance.

C'est pourquoi il est préférable de neutraliser le module de régulation 23, par exemple, pour certaines valeurs du paramètre de fonctionnement P3 associé au couple appliqué sur le volant 2 ; ces valeurs correspondent aux valeurs de couple inférieures à une valeur de seuil prédéterminée Co comprise entre 1 et 2 N.m, et qui pour un véhicule donné peut être 1,5 N.m. Cette valeur peut être déterminée pour chaque type ou modèle de véhicule en procédant à des essais portant sur un certain nombre de critères d'évaluation, ainsi que cela se pratique dans ce secteur de la technique.

La direction assistée électrique et le procédé de commande associé tels que définis dans l'invention, procurent un effort d'assistance qui compense aussi bien les effets de l'usure des pièces mécaniques de transmission du dispositif d'assistance, tout au long de la durée de vie du véhicule et sans dérive dans le temps, que les variations des caractéristiques mécaniques d'un véhicule à l'autre, et les variations de ces caractéristiques suivant les conditions d'utilisation du véhicule.

Par ailleurs, en comparaison des directions assistées électriques connues, l'invention améliore l'agrément de conduite, du fait notamment d'une grande réactivité obtenue par la compensation instantanée des efforts d'inertie générés par les pièces mécaniques de la direction.

Ces résultats sont par ailleurs obtenus par des moyens simples et fiables et sans augmentation notable du coût.

## Revendications

1. Ensemble de direction assistée électrique comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme (10) d'orientation des roues directrices (9) du véhicule, le dispositif d'assistance (12) comportant un moteur électrique (15) qui entraîne un organe d'assistance (20) coopérant avec la crémaillère (8), et un dispositif de commande (16) fournissant audit moteur électrique (15) un signal de commande (S) adapté pour faire varier le couple de sortie (Cs) du moteur électrique (15), en fonction de paramètres de fonctionnement de l'arbre de direction et/ou plus généralement du véhicule, **caractérisé en ce que** le dispositif d'assistance (12) comporte sur la crémaillère (8) des moyens de mesure (21) de l'effort exercé par l'organe d'assistance (20) sur la crémaillère (8), et le dispositif de commande (16) est adapté pour modifier le signal de commande de couple (S) en fonction de la valeur d'effort (m) mesurée par lesdits moyens de mesure (21).

2. Ensemble de direction assistée suivant la revendication 1, **caractérisée en ce que** le dispositif de commande (16) comporte un calculateur (22) qui élabore, à partir de données préenregistrées et de paramètres de fonctionnement (P1, P2, P3), un signal de consigne de couple (S1), et un module de régulation (23) qui élabore, en fonction du signal de consigne (S1) et de la valeur d'effort mesurée (m), le signal de commande de couple (S).

3. Ensemble de direction assistée suivant la revendication 2, **caractérisée en ce que** le module de régulation (23) comporte un organe de conversion (24) qui délivre à partir de la valeur d'effort mesurée (m), un signal de mesure (S0) qui est une image de la valeur réelle du couple d'assistance du moteur (15) appliqué sur l'organe d'assistance (20).

4. Ensemble de direction assistée suivant la revendication 3, **caractérisée en ce que** le module de régulation (23) comporte un organe comparateur (25) qui reçoit en entrée le signal de mesure du couple (S0) et le signal de consigne de couple (S1), et délivre en sortie un signal d'écart de couple (S_{Δ}).

5. Ensemble de direction assistée suivant la revendication 4, **caractérisée en ce que** le module de régulation (23) comporte un régulateur P. I. D. (26) qui élabore le signal de commande de couple (S) à partir du signal d'écart de couple (S_{Δ}).

6. Ensemble de direction assistée suivant la revendication 5, **caractérisée en ce que** le gain proportionnel (Kₚ) du régulateur P. I. D. (26) est préréglé à une valeur comprise entre 6 et 9.

7. Ensemble de direction assistée suivant la revendication 5, **caractérisée en ce que** le gain intégral (Kᵢ) du régulateur P. I. D. (26) est préréglé à une valeur comprise entre 140 et 210.

8. Ensemble de direction assistée suivant la revendication 5, **caractérisée en ce que** le gain différentiel (K_{d}) du régulateur P. I. D. (26) est préréglé à une valeur comprise entre 0,016 et 0,024.

9. Ensemble de direction assistée suivant l'une quelconque des revendications 5 à 8, **caractérisé en ce qu'**il comprend des moyens (14) d'estimation du couple appliqué sur le volant (2), et que le module de régulation (23) est neutralisé pour des valeurs de couple estimé par lesdits moyens d'estimation (14) inférieures à une valeur de couple prédéterminée (Co).

10. Ensemble de direction assistée suivant la revendication 9, **caractérisé en ce que** ladite valeur de couple prédéterminée (Co) est comprise entre 1 et 2 N.m.

11. Procédé de commande, par un signal de commande de couple, d'un moteur électrique de dispositif d'assistance électrique d'un ensemble de direction pour véhicule automobile, comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme d'orientation des roues directrices (9) du véhicule, le dispositif d'assistance (12) comportant un moteur électrique (15) qui entraîne, par l'intermédiaire d'un réducteur (19), un organe d'assistance (20) coopérant avec la crémaillère (8), et un dispositif de commande (16) fournissant audit moteur électrique (15) un signal de commande (S) adapté pour faire varier le couple de sortie (Cs) du moteur électrique (15), en fonction de paramètres de fonctionnement de l'arbre de direction et/ou plus généralement du véhicule, **caractérisé en ce qu'**on élabore le signal de commande de couple (S) de la façon suivante :
- on mesure l'effort exercé par l'organe d'assistance (20) sur la crémaillère (8);
- on convertit la valeur d'effort (m) ainsi obtenue en valeur de couple réel estimée à partir des caractéristiques du réducteur (19), de l'organe d'assistance (20) et de la crémaillère (8) ;
- on calcule l'écart entre une valeur de couple de consigne, déterminée à partir de données préenregistrées et de paramètres de fonctionnement (P1, P2, P3), et la valeur de couple réel ainsi estimée ;
- on calcule une valeur de commande de couple au moyen d'une loi de régulation P. I. D. dont les coefficients (Kₚ, Kᵢ, K_{d}) sont prédéterminés ;
- on élabore le signal de commande de couple (S) qui correspond à ladite valeur de commande.

12. Véhicule automobile comportant un ensemble de direction assistée électrique suivant l'une quelconque des revendications 1 à 10.

## Patentansprüche

1. Elektrisches Servolenkungssystem mit einer drehbaren Lenkungswelle (4), die an einem Ende ein Lenkrad (2) und an ihrem anderen Ende ein Übersetzungselement (7) trägt, das mit einer translationsbeweglichen Zahnstange (8) zusammenwirkt, die mit jedem ihrer Enden (11) mit einer Ausrichtungseinrichtung (10) für die Leiträder (9) des Fahrzeugs verbunden ist, wobei die Servovorrichtung (12) einen Elektromotor (15), der ein mit der Zahnstange (8) zusammenwirkendes Servoglied (20) antreibt, und eine Steuervorrichtung (16) umfasst, die dem Elektromotor (15) ein Steuersignal (S) bereitstellt, das dazu ausgelegt ist, das Ausgangsmoment (Cs) des Elektromotors (15) in Abhängigkeit von Betriebsparametern der Lenkungswelle und/oder allgemeiner des Fahrzeugs sich verändern zu lassen, **dadurch gekennzeichnet, dass** die Servovorrichtung (12) an der Zahnstange (8) Messeinrichtungen (21) für die durch das Servoglied (20) auf die Zahnstange (8) ausgeübte Kraft umfasst, und die Steuervorrichtung (16) dazu ausgelegt ist, das Steuersignal (S) für das Moment in Abhängigkeit von dem durch die Messeinrichtungen (21) ermittelten Kräftewerts (m) abzuändern.

2. Scrvolenkungssystem nach Anspruch 1, **dadurch gekennzeichnet, dass** die Steuervorrichtung (16) einen Rechner (22), der ausgehend von voreingespeicherten Daten und Betriebsparametern (P1, P2, P3) ein Momentreferenzsignal (S1) herstellt, und einen Regelbaustein (23) umfasst, der in Abhängigkeit vom Referenzsignal (S1) und dem ermittelten Kräftewert (m) das Steuersignal (S) für das Moment herstellt.

3. Servolenkungssystem nach Anspruch 2, **dadurch gekennzeichnet, dass** der Regelbaustein (23) ein Wandlerteil (24) umfasst, das ausgehend vom ermittelten Kräftewert (m) ein Messsignal (S0) abgibt, welches ein Abbild des reellen Werts des Servomoments des Motors (15) ist, mit dem das Servoglied (20) beaufschlagt wird.

4. Servolenkungssystem nach Anspruch 3, **dadurch gekennzeichnet, dass** der Regelbaustein (23) eine Vergleichscinrichtung (25) umfasst, die als Eingang das Messsignal (S0) des Moments und das Momentreferenzsignal (S1) empfängt und als Ausgang ein Momentversatzsignal (S_{Δ}) abgibt.

5. Servolenkungssystem nach Anspruch 4, **dadurch gekennzeichnet, dass** der Regelbaustein (23) einen PID-Regler (26) umfasst, der das Steuersignal (S) für das Moment aus dem Momentversatzsignal (S_{Δ}) herstellt.

6. Servolenkungssystem nach Anspruch 5, **dadurch gekennzeichnet, dass** die Proportionalverstärkung (Kₚ) des PID-Reglers (26) auf einen Wert zwischen 6 und 9 voreingestellt ist.

7. Servolenkungssystem nach Anspruch 5, **dadurch gekennzeichnet, dass** die Proportionalverstärkung (Kₚ) des PID-Reglers (26) auf einen Wert zwischen 140 und 210 voreingestellt ist.

8. Servolenkungssystem nach Anspruch 5, **dadurch gekennzeichnet, dass** die Proportionalverstärkung (Kₚ) des PID-Reglers (26) auf einen Wert zwischen 0,016 und 0,024 voreingestellt ist.

9. Servolenkungssystem nach einem der vorhergehenden Ansprüche 5 bis 8, **dadurch gekennzeichnet, dass** es Schätzeinrichtungen (14) für das am Lenkrad (2) anliegende Moment umfasst und der Regelbaustein (23) bei von den Schätzeinrichtungen (14) geschätzten Momentwerten, die unter einem vorbestimmten, Momentwert (Co) liegen, nicht reagiert.

10. Servolenkungssystem nach Anspruch 9, **dadurch gekennzeichnet, dass** der vorbestimmte Momentwert (Co) zwischen 1 und 2 Nm liegt.

11. Verfahren zum Steuern, mittels eines Steuersignals für das Moment, eines Elektromotors einer elektrischen Servolenkungsvorrichtung eines Lenkungssystems eines Kraftfahrzeugs, das eine drehbare Lenkungswelle (4) umfasst, die an einem Ende ein Lenkrad (2) und an ihrem anderen Ende ein Übersctzungselement (7) trägt, das mit einer translationsbeweglichen Zahnstange (8) zusammenwirkt, die mit jedem ihrer Enden (11) mit einer Ausrichtungseinrichtung (10) für die Leiträder (9) des Fahrzeugs verbunden ist, wobei die Servovorrichtung (12) einen Elektromotor (15), der **mittels eines Untersetzungsgetriebes (19)** ein mit der Zahnstange (8) zusammenwirkendes Servoglied (20) antreibt, und eine Steuervorrichtung (16) umfasst, die dem Elektromotor (15) ein Steuersignal (S) bereitstellt, das dazu ausgelegt ist, das Ausgangsmoment (Cs) des Elektromotors (15) in Abhängigkeit von Betriebsparametern der Lenkungswelle und/oder allgemeiner des Fahrzeugs sich verändern zu lassen, **dadurch gekennzeichnet, dass** das Steuersignal (S) für das Moment auf folgende Weise hergestellt wird:
- die vom Servoglied (20) auf die Zahnstange (8) ausgeübte Kraft wird gemessen;
- der so erhaltene Kräftewert (m) wird in einen reellen Momentwert umgewandelt, der aus den Eigenschaften des Untersetzungsgetriebes (19), des Servoglieds (20) und der Zahnstange (8) geschätzt wird;
- der Versatz zwischen einem Momentreferenzwert wird ausgehend von voreingespeicherten Daten und Betriebsparametern (P1, P2, P3) und dem so geschätzten reellen Momentwert berechnet;
- ein Momentsteuerwert wird mittels eines PID-Regelegesetzes berechnet, dessen Koeffizienten (Kₚ, Kᵢ, K_{d}) vorbestimmt sind;
- das Steuersignal (S) für das Moment wird hergestellt, das diesem Steuerwert entspricht.

12. Kraftfahrzeug mit einem elektrischen Servolenkungssystem nach einem der Ansprüche 1 bis 10.

## Claims

1. An electrical power assisted steering assembly, comprising a rotary steering column (4) bearing at one end a steering wheel (2) and at its other end a transmission member (7) cooperating with a rack (8) which is movable in translation and is connected at each of its ends (11 ) to a mechanism (10) for orienting the steered wheels (9) of the vehicle, the power assistance device (12) having an electric motor (15) which drives a power assistance member (20) cooperating with the rack (8), and a control device (16) supplying to the said electric motor (15) a control signal (S) adapted to vary the output torque (Cs) of the electric motor (15) as a function of operating parameters of the steering column and/or, more generally, the vehicle, **characterised in that** the power assistance device (12) has on the rack (8) means (21) for measuring the force exerted on the rack (8) by the power assistance member (20), and the control device (16) is adapted to modify the torque control signal (S) as a function of the value of the force (m) measured by the said measuring means (21 ).

2. A power assisted steering assembly according to Claim 1, **characterised in that** the control device (16) has a calculator (22), which uses pre-recorded data and operating parameters (P1, P2, P3) to prepare a torque reference signal (S1), and a regulating module (23) which prepares the torque control signal (S) as a function of the reference signal (S1) and the value of the force (m) measured.

3. A power assisted steering assembly according to Claim 2, **characterised in that** the regulating module (23) has a converting member (24) which uses the value of the force (m) measured to supply a measuring signal (S0) which is a representation of the actual value of the power assistance torque of the motor (15) which is applied to the power assistance member (20).

4. A power assisted steering assembly according to Claim 3, **characterised in that** the regulating module (23) has a comparator member (25) which receives at its input the torque measuring signal (S0) and the torque reference signal (S1) and supplies at its output a torque difference signal (S_{Δ}).

5. A power assisted steering assembly according to Claim 4, **characterised in that** the regulating module (23) has a PID regulator (26) which prepares the torque control signal (S) from the torque difference signal (S_{Δ}).

6. A power assisted steering assembly according to Claim 5, **characterised in that** the proportional gain (Kₚ) of the PID regulator (26) is pre-set to a value between 6 and 9.

7. A power assisted steering assembly according to Claim 5, **characterised in that** the integral gain (Kᵢ) of the PID regulator (26) is pre-set to a value between 140 and 210.

8. A power assisted steering assembly according to Claim 5, **characterised in that** the differential gain (K_{d}) of the PID regulator (26) is pre-set to a value between 0.016 and 0.024.

9. A power assisted steering assembly according to any one of Claims 5 to 8, **characterised in that** it comprises means (14) for estimating the torque applied to the steering wheel (2), and **in that** the regulating module (23) is neutralised for those values of the torque estimated by the said estimating means (14) which are lower than a predetermined torque value (Co).

10. A power assisted steering assembly according to Claim 9, **characterised in that in that** the said predetermined torque value (Co) is between 1 and 2 Nm.

11. A process for controlling, by means of a torque control signal, an electric motor of an electrical power assistance device of a steering assembly for an automotive vehicle, comprising a rotary steering column (4) bearing at one end a steering wheel (2) and at its other end a transmission member (7) cooperating with a rack (8) which is movable in translation and is connected at each of its ends (11) to a mechanism for orienting the steered wheels (9) of the vehicle, the power assistance device (12) having an electric motor (15) which drives **by way of a reduction gear (19)** a power assistance member (20) cooperating with the rack (8), and a control device (16) supplying to the said electric motor (15) a control signal (S) adapted to vary the output torque (Cs) of the electric motor (15) as a function of operating parameters of the steering column and/or, more generally, the vehicle, **characterised in that** the torque control signal (S) is prepared in the following way:
- the force exerted on the rack (8) by the power assistance member (20) is measured;
- the value of the force (m) thus obtained is converted into an actual torque value estimated from the characteristics of the reduction gear (19), the power assistance member (20) and the rack (8);
- the difference between a reference torque value, determined from pre-recorded data and operating parameters (P1, P2, P3), and the actual torque value estimated in this way is calculated;
- a torque control value is calculated using a PID regulation law whereof the coefficients (Kₚ, Kᵢ, K_{d}) are predetermined;
- the torque control signal (S) corresponding to the said control value is prepared.

12. An automotive vehicle having an electrical power assisted steering assembly according to any one of Claims 1 to 10.
